# EUROPEAN PATENT SPECIFICATION

(11) **EP 2 363 319 B1**
(45) Date of publication and mention of the grant of the patent: **14.08.2019**
(21) Application number: 11150975.8
(22) Date of filing: 14.01.2011
(51) Int. Cl.: B60N 2/70, B29C 44/12, B62J 1/12, B60N 2/58

(54) **Vehicular seat and method for making the same**
Fahrzeugsitz und Verfahren zu dessen Herstellung
Siège de véhicule et son procédé de fabrication

(30) Priority: 26.02.2010 JP 2010042256
(43) Date of publication of application: 07.09.2011
(73) Proprietor: Honda Motor Co., Ltd., Tokyo 107-8556 (JP)
(72) Inventor: Takeuchi, Tsutomu, Saitama 351-0193 (JP); Koyano, Mitsue, Saitama 351-0193 (JP); Ohara, Takeshi, Saitama 351-0193 (JP)
(74) Representative: Weickmann & Weickmann PartmbB

(56) References cited:
- FR-A1- 2 615 714
- JP-A- 7 108 544
- JP-A- 2007 175 482

## Description

### Technical Field

The present invention relates to a vehicular seat and a method for making the vehicular seat.

### Prior Art

Known vehicular seat and watercraft seat include a first cushion member formed of urethane and covered with a seat skin and a second cushion member formed of a thermoplastic elastomer and disposed between the first cushion member and a bottom plate (see, for example, Japanese Patent Application No. JP 2007-175482 A).

A vehicular seat according to the preamble of claim 1 is known from JP 7-108544 A.

FR 2 615 714 A1 discloses a seat in which a covering sheet is arranged between a first cushion member and a second cushion member and extends toward a lower surface thereof.

### Problem to be Solved by the Invention

In the vehicular seat and the watercraft seat disclosed in Japanese Patent Application No. JP 2007-175482 A, however, the first cushion member and the second cushion member are formed separately from each other and thereafter bonded together. This involves a large number of work processes, resulting in an increased manufacturing cost. To reduce the number of work processes, a one-piece molding process may be possible, in which the first cushion member of urethane is foamed on the second cushion member of thermoplastic elastomer. In this case, however, a foaming pressure causes the first cushion member to bite into and be fused with the second cushion member, resulting in degraded riding comfort.

It is the object of the present invention to provide a vehicular seat and a method for making the vehicular seat that can achieve a favorable riding comfort, reduce the number of work processes involved, and reduce the manufacturing cost even by foaming a first cushion member of urethane on a second cushion member of a thermoplastic elastomer to make an integrated assembly of the first cushion member of urethane and the second cushion member.

### Means for Solving the Problem

To achieve the foregoing object, a first aspect of the present invention provides a vehicular seat that comprises a first cushion member formed of urethane, the first cushion member being covered with a seat skin; a second cushion member formed of a thermoplastic elastomer, the second cushion member being disposed between the first cushion member and a bottom plate; and a covering sheet disposed between the first cushion member and the second cushion member, wherein the second cushion member has a net-like structure, the bottom plate has a plurality of ribs disposed on an upper surface thereof, the ribs extending toward a lower surface of the second cushion member to support the lower surface of the second cushion member, and the covering sheet covers the entire second cushion member except for a part of the lower surface thereof adjacent the bottom plate such that air inside the second cushion member can be aspirated via the ribs on the side of the bottom plate.

A second aspect of the present invention provides a method for making a vehicular seat according to the first aspect, the method comprising the steps of: forming the second cushion member having a net-like structure; affixing the covering sheet generally to the second cushion member excluding part thereof; setting the second cushion member, to which the covering sheet is affixed, into a first mold; loading a urethane material into a second mold; closing the first mold and the second mold; foaming the urethane material to thereby integrally form the first cushion member on a surface of the covering sheet affixed to the second cushion member; removing an integrated assembly of the first cushion member, the second cushion member, and the covering sheet from the first mold and the second mold; and mounting the bottom plate on a lower surface of the integrated assembly of the first cushion member, the second cushion member, and the covering sheet, covering a surface of the first cushion member with the seat skin, and mounting the seat skin on the bottom plate.

### Effects of the Invention

According to the first aspect of the present invention, the covering sheet is disposed between the first cushion member and the second cushion member. When the first cushion member of urethane is foamed to be integrally formed on the second cushion member of the thermoplastic elastomer, the foamed first cushion member is blocked by the covering sheet. This eliminates the likelihood that the first cushion member and the second cushion member will be fused together, so that favorable riding comfort of the vehicular seat can be achieved. In addition, the first cushion member can be foamed to be integrated with the second cushion member. This reduces the number of work processes involved, so that a manufacturing cost of the vehicular seat can be reduced.

Further, the covering sheet is disposed on the side of the second cushion member adjacent the first cushion member and not on the entire surface or part of the side of the second cushion member adjacent the bottom plate. Air inside the second cushion member can therefore be aspirated on the side of the bottom plate according to movement of the occupant, so that favorable riding comfort of the vehicular seat can be achieved.

Further, the ribs extending toward the side of the second cushion member are disposed on the upper surface of the bottom plate. The second cushion member can therefore be effectively bled of air according to the movement of the occupant, so that favorable riding comfort of the vehicular seat can be achieved.

According to the second aspect of the present invention, the method includes the steps of: forming the second cushion member having a net-like structure; affixing the covering sheet generally to the second cushion member excluding part thereof; setting the second cushion member, to which the covering sheet is affixed, into the first mold; loading the urethane material into the second mold; closing the first mold and the second mold; foaming the urethane material to thereby integrally form the first cushion member on a surface of the covering sheet affixed to the second cushion member; removing the integrated assembly of the first cushion member, the second cushion member, and the covering sheet from the first mold and the second mold; and mounting the bottom plate on a lower surface of the integrated assembly of the first cushion member, the second cushion member, and the covering sheet, covering a surface of the first cushion member with the seat skin, and mounting the seat skin on the bottom plate. The vehicular seat having the first and second cushion members integrated together can therefore be easily obtained by foaming the urethane material.

### Brief Description of the Drawings

Fig. 1 is a left side elevational view for illustrating a motorcycle mounted with a vehicular seat according to a first embodiment of the present invention.
Fig. 2 is a partly cutaway perspective view showing the vehicular seat shown in Fig. 1.
Fig. 3 is a cross-sectional view taken along line A-A of Fig. 2.
Fig. 4 is a cross-sectional view for illustrating a vehicular seat according to a second embodiment of the present invention.
Fig. 5 is a cross-sectional view for illustrating a vehicular seat according to a third embodiment of the present invention.
Fig. 6 is a partly cutaway perspective view showing a vehicular seat for a four-wheel vehicle using a second cushion member according to the second embodiment of the present invention.
Fig. 7 is a partly cutaway perspective view showing a watercraft seat for a saddle riding type watercraft using a second cushion member according to the first embodiment of the present invention.
Fig. 8 is a view for illustrating processes for manufacturing the vehicular seat according to the second embodiment of the present invention.
Fig. 9 is a view for illustrating processes that follow those shown in Fig. 8 for manufacturing the vehicular seat.

### Mode for Carrying Out the Invention

### (First Embodiment)

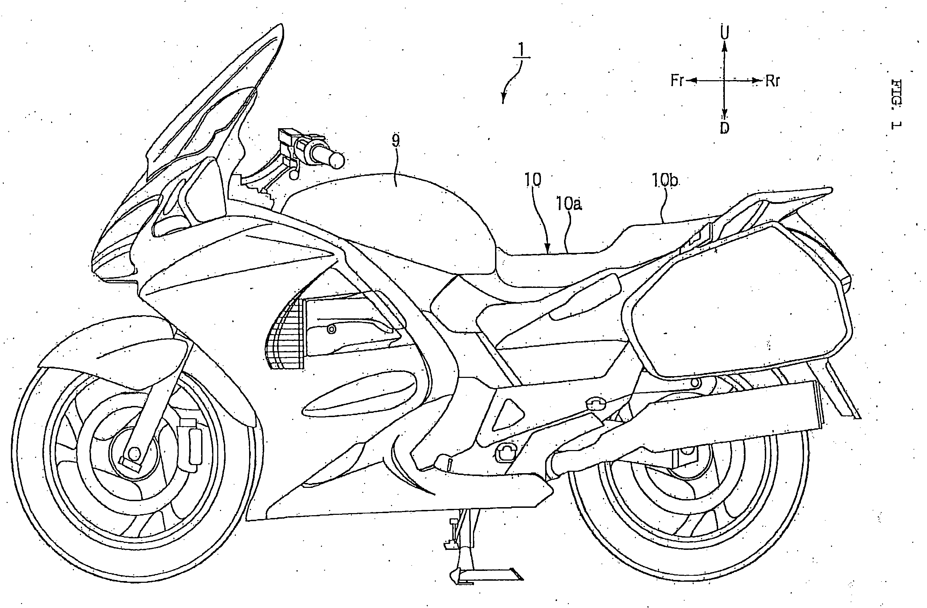

A vehicular seat according to a first embodiment of the present invention will be described below with reference to Figs. 1 to 3. The drawings should be viewed in the direction of reference numerals. Throughout the descriptions given hereunder, expressions indicating directions including front and rear, right and left, and upper and lower mean the same directions as those as viewed from an occupant. In the drawings, an arrow Fr indicates forward of the vehicle, an arrow L indicates leftward of the vehicle, an arrow R indicates rightward of the vehicle, an arrow U indicates upward of the vehicle, and an arrow D indicates downward of the vehicle.

Referring to Fig. 1, a motorcycle 1 includes a vehicular seat 10 according to the first embodiment of the present invention. The vehicular seat 10 is disposed rearwardly of a fuel tank 9 of the motorcycle 1 and includes a rider's seat 10a and a pillion 10b.

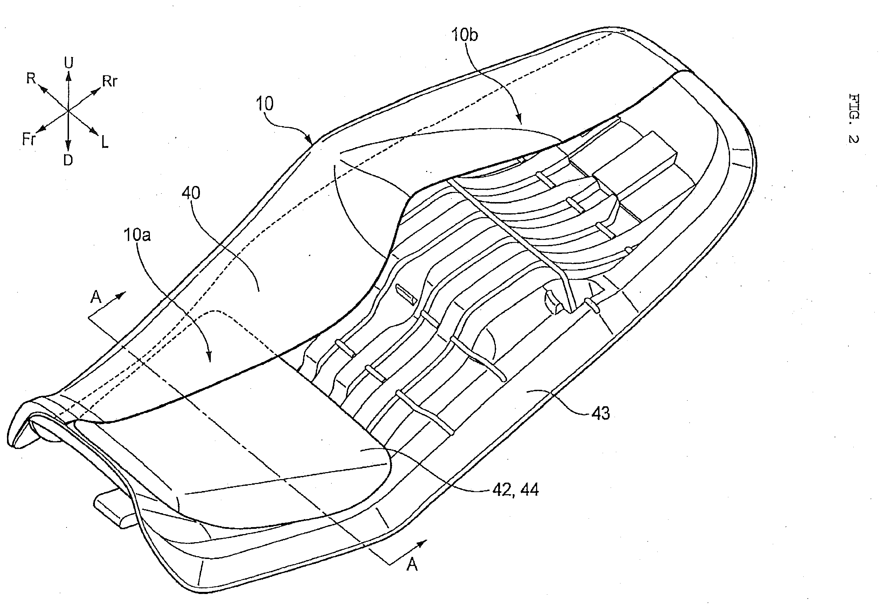

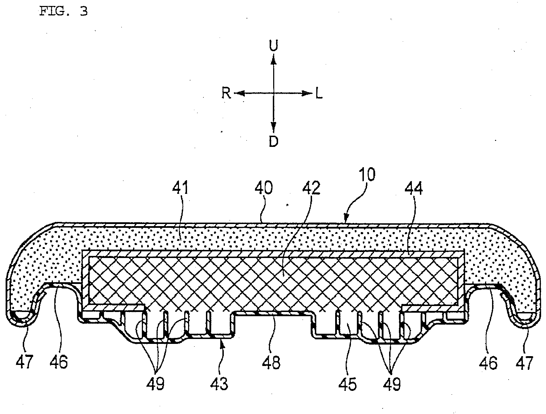

Referring to Figs. 2 and 3, the vehicular seat 10 includes a first cushion member 41, a second cushion member 42, and a covering sheet 44. Specifically, the first cushion member 41 formed of urethane is covered with a seat skin 40. The second cushion member 42 formed of a thermoplastic elastomer is disposed between the first cushion member 41 and a bottom plate 43. The covering sheet 44 is disposed between the first cushion member 41 and the second cushion member 42. Note that, in the first embodiment of the present invention, the second cushion member 42 is disposed on the side of the rider's seat 10a; nonetheless, the second cushion member 42 may also be disposed on the side of the pillion 10b. In Fig. 2, the first cushion member 41 is omitted for ease of understanding of a structure of the vehicular seat 10.

The bottom plate 43 is a sheet-like member formed of a synthetic resin. Referring to Fig. 3, the bottom plate 43 has a recessed portion 45 formed at a central portion thereof, in which the second cushion member 42 is fitted. The recessed portion 45 has a curved portion 46 formed on each of both end portions in a vehicle width direction. The curved portion 46 protrudes upwardly and is formed continuously. The bottom plate 43 also has a seat skin mounting portion 47 formed continuously on each of outer end portions in the vehicle width direction of the curved portions 46. The seat skin mounting portion 47 has a substantially J-shaped cross section. The bottom plate 43 further has a protruding portion 48 formed continuously at a central portion of a bottom of the recessed portion 45. The protruding portion 48 supports a lower surface of the second cushion member 42 and enhances stiffness of the bottom plate 43. A plurality of ribs 49 (a total of 12 on the left and right sides shown in Fig. 3) is formed on an upper surface of the bottom of the recessed portion 45. The ribs extend toward the side of the second cushion member 42 to support the lower surface of the second cushion member 42 and enhance stiffness of the bottom plate 43.

The second cushion member 42 is formed by cutting a block-like thermoplastic elastomer base material. Referring to Fig. 3, the second cushion member 42 is formed into a shape having a rectangular cross section and fitted in the recessed portion 45 of the bottom plate 43. According to the first embodiment of the present invention, it is possible to make the occupant feel less corners of the second cushion member 42 when seated by adjusting a thickness of the first cushion member 41 and that of the covering sheet 44. The vehicular seat 10 is thereby allowed to exhibit a uniform feel. The second cushion member 42 is a thermoplastic elastomer striate body of an isotropic gel-like viscoelastic body type that is coupled three-dimensionally into a net-like thermoplastic elastomer.

Referring to Fig. 3, the covering sheet 44 is affixed to a surface of the second cushion member 42 on the side adjacent the first cushion member 41. The covering sheet 44 is not affixed to part of a surface of the second cushion member 42 on the side of the bottom plate 43. Specifically, the covering sheet 44 is affixed to an upper surface, side surfaces, and part of a bottom surface of the second cushion member 42.

The first cushion member 41 is formed integrally on a surface of the covering sheet 44 affixed to the second cushion member 42 by foaming a urethane material in molds 81, 82 to be described later. This causes the covering sheet 44 to be in tight contact with the first cushion member 41 by a foaming pressure, facilitating clearance control.

As described heretofore, in the vehicular seat 10 according to the first embodiment of the present invention, the covering sheet 44 is disposed between the first cushion member 41 and the second cushion member 42.

When the first cushion member 41 of urethane is foamed to be integrally formed on the second cushion member 42 of the thermoplastic elastomer, the foamed first cushion member 41 is blocked by the covering sheet 44. This eliminates the likelihood that the first cushion member 41 and the second cushion member 42 will be fused together, so that favorable riding comfort of the vehicular seat 10 can be achieved. In addition, the first cushion member 41 can be foamed to be integrated with the second cushion member 42. This reduces the number of work processes involved, so that a manufacturing cost of the vehicular seat 10 can be reduced.

In the vehicular seat 10 according to the first embodiment of the present invention, the covering sheet 44 is affixed to a side of the second cushion member 42 adjacent the first cushion member 41 and is not to part of a side of the second cushion member 42 adjacent the bottom plate 43. Air inside the second cushion member 42 can therefore be aspirated on the side of the bottom plate 43 according to movement of the occupant, so that favorable riding comfort of the vehicular seat 10 can be achieved.

Additionally, in the vehicular seat 10 according to the first embodiment of the present invention, the ribs extending toward the side of the second cushion member 42 are disposed on the upper surface of the bottom plate 43. The second cushion member 42 can therefore be effectively bled of air according to the movement of the occupant, so that favorable riding comfort of the vehicular seat 10 can be achieved.

Additionally, in the vehicular seat 10 according to the first embodiment of the present invention, the second cushion member 42 is formed by cutting operations into a shape having the rectangular cross section. This eliminates the need for forming an obliquely cut surface 52a through cutting operations as in a second cushion member 52 of a second embodiment of the present invention to be described later. As a result, the manufacturing cost of the vehicular seat 10 can be further reduced.

### (Second Embodiment)

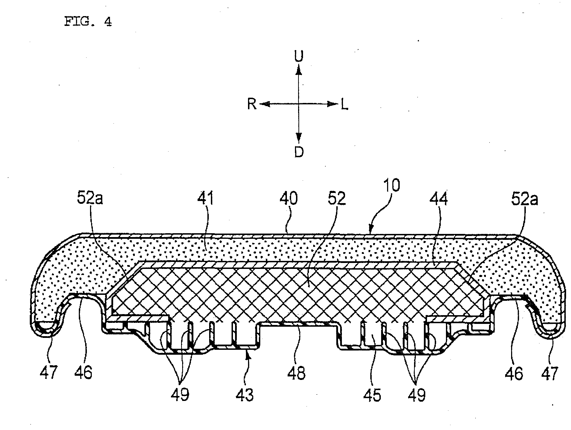

A vehicular seat according to a second embodiment of the present invention will be described below with reference to Fig. 4. Like or corresponding parts are identified by the same reference numerals as those used for the first embodiment of the present invention and descriptions for those parts will be omitted or simplified.

Referring to Fig. 4, a vehicular seat 10 according to the second embodiment of the present invention includes a first cushion member 41, a second cushion member 52, and a covering sheet 44. More specifically, the first cushion member 41 formed of urethane is covered with a seat skin 40. The second cushion member 52 formed of a thermoplastic elastomer is disposed between the first cushion member 41 and a bottom plate 43. The covering sheet 44 is disposed between the first cushion member 41 and the second cushion member 52.

The second cushion member 52 is formed by cutting a block-like thermoplastic elastomer base material. Referring to Fig. 4, the second cushion member 52 has a straight-line obliquely cut surface 52a on each side of an upper portion of outer end portions in the vehicle width direction thereof. The obliquely cut surface 52a is formed such that the second cushion member 52 has a thickness that gradually decreases toward the outside in the vehicle width direction.

As shown in Fig. 4, the covering sheet 44 is affixed to an upper surface, the obliquely cut surfaces 52a, side surfaces, and part of a bottom surface of the second cushion member 52.

As described above, in the vehicular seat 10 according to the second embodiment of the present invention, the second cushion member 52 is formed to have the obliquely cut surfaces 52a through cutting operations. This eliminates the need for forming a protruding portion 62b and an arcuate surface 62c by thermal forming as in a second cushion member 62 of a third embodiment of the present invention to be described later. As a result, the manufacturing cost of the vehicular seat 10 can be reduced.

Additionally, in the vehicular seat 10 according to the second embodiment of the present invention, the second cushion member 52 has the obliquely cut surfaces 52a formed at the upper portions on the outer end portions in the vehicle width direction thereof. This allows an entire seat surface of the vehicular seat 10 to exhibit a uniform feel during seating.

Other arrangements and effects are the same as those of the first embodiment of the present invention.

### (Third Embodiment)

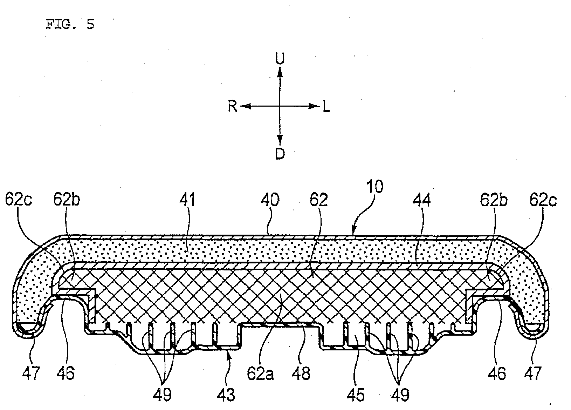

A vehicular seat according to a third embodiment of the present invention will be described below with reference to Fig. 5. Like or corresponding parts are identified by the same reference numerals as those used for the first embodiment of the present invention and descriptions for those parts will be omitted or simplified.

Referring to Fig. 5, a vehicular seat 10 according to the third embodiment of the present invention includes a first cushion member 41, a second cushion member 62, and a covering sheet 44. More specifically, the first cushion member 41 formed of urethane is covered with a seat skin 40. The second cushion member 62 formed of a thermoplastic elastomer is disposed between the first cushion member 41 and a bottom plate 43. The covering sheet 44 is disposed between the first cushion member 41 and the second cushion member 52.

The second cushion member 62 is formed by thermally forming a block-like thermoplastic elastomer base material. Referring to Fig. 5, the second cushion member 62 has a main unit portion 62a and protruding portions 62b. More specifically, the main unit portion 62a is fitted into a recessed portion 45 in the bottom plate 43. Each of the protruding portions 62b protrudes outwardly from an outer end surface in the vehicle width direction of the main unit portion 62a and is placed on a curved portion 46 of the bottom plate 43. In addition, an arcuate surface 62c is formed at an upper corner of each of the protruding portions 62b.

Additionally, referring to Fig. 5, the covering sheet 44 is affixed to an upper surface of the main unit portion 62a, upper surfaces, side surfaces, and bottom surfaces of the protruding portions 62b, and side surfaces of the main unit portion 62a of the second cushion member 62.

As described above, in the vehicular seat 10 according to the third embodiment of the present invention, the second cushion member 62 includes the main unit portion 62a and the protruding portions 62b that protrude outwardly from the upper portions of the outer end surfaces in the vehicle width direction of the main unit portion 62a. Each of the protruding portions 62b includes the arcuate surface 62c formed at each of the upper corners of the protruding portions 62b. This allows both sides of the vehicular seat 10 to exhibit a uniform feel during seating. Riding comfort of the vehicular seat 10 can therefore be further enhanced.

Other arrangements and effects are the same as those of the first embodiment of the present invention.

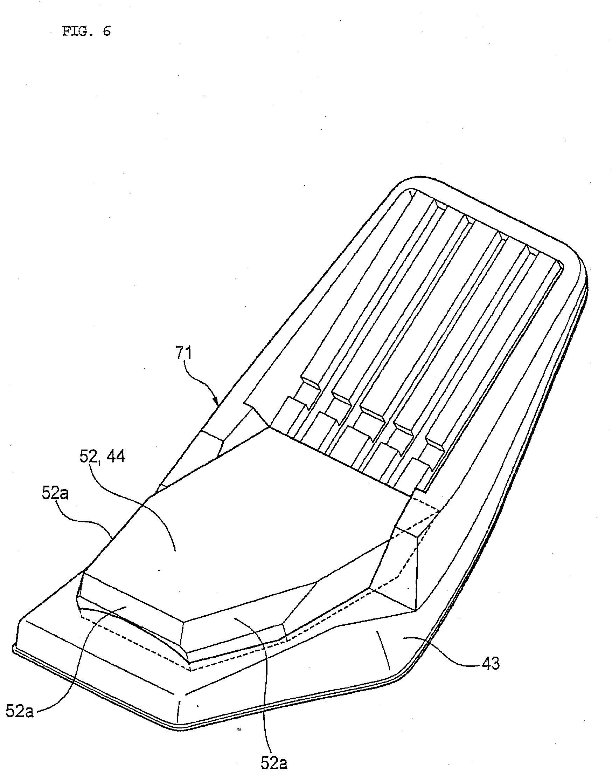

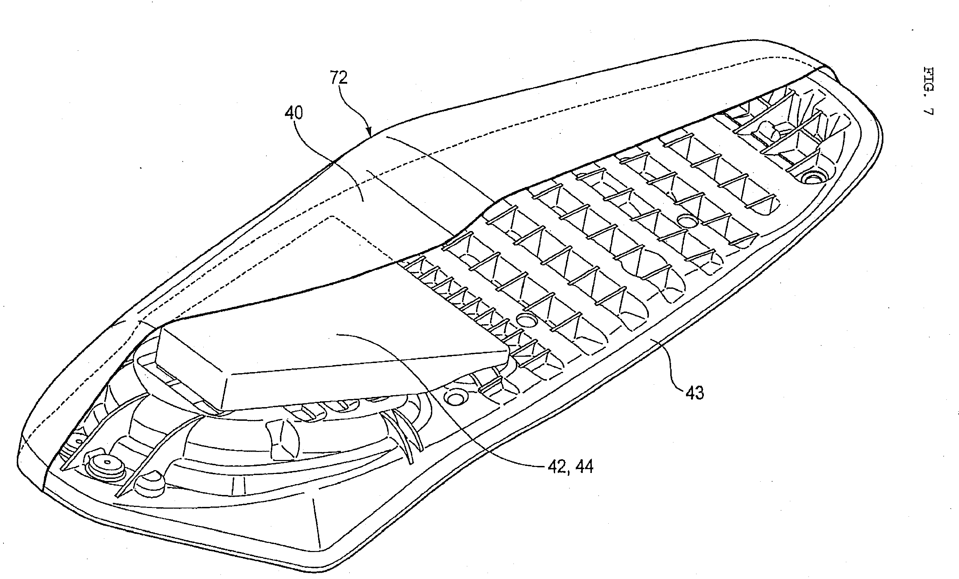

The present invention has been described with particularity relative to the detailed description of the exemplary preferred first through third embodiments, in which the present invention is applied to the vehicular seat 10 of the motorcycle 1. The present invention may still be applied to a vehicular seat 71 of a four-wheeled vehicle as shown in Fig. 6 or a watercraft seat 72 of a saddle riding type watercraft as shown in Fig. 7. In Fig. 6, the second cushion member 52 of the second embodiment of the present invention is used in the vehicular seat 71 of the four-wheeled vehicle. The second cushion member 42 or 62 of the first or third embodiment of the present invention may instead be used. In Fig. 7, the second cushion member 42 of the first embodiment of the present invention is used in the watercraft seat 72 of the saddle riding type watercraft. The second cushion member 52 or 62 of the second or third embodiment of the present invention may instead be used.

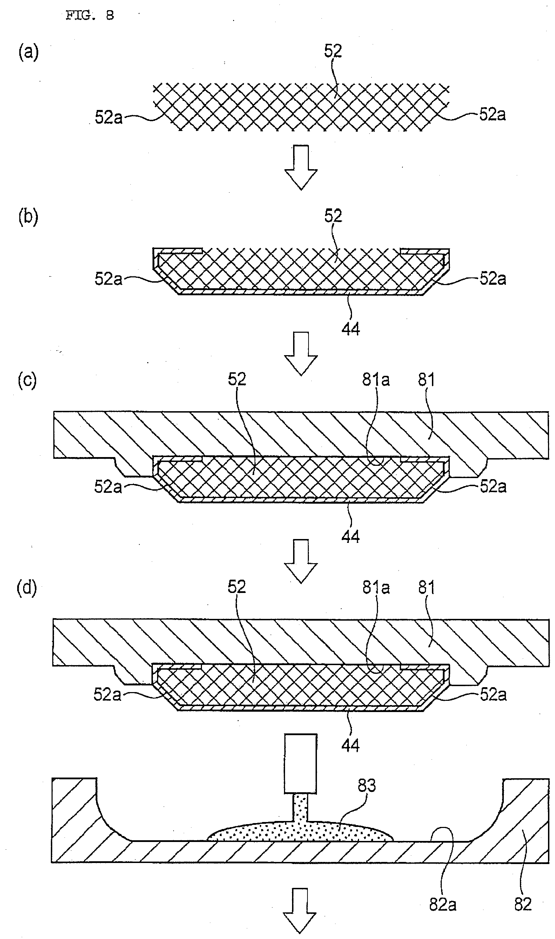

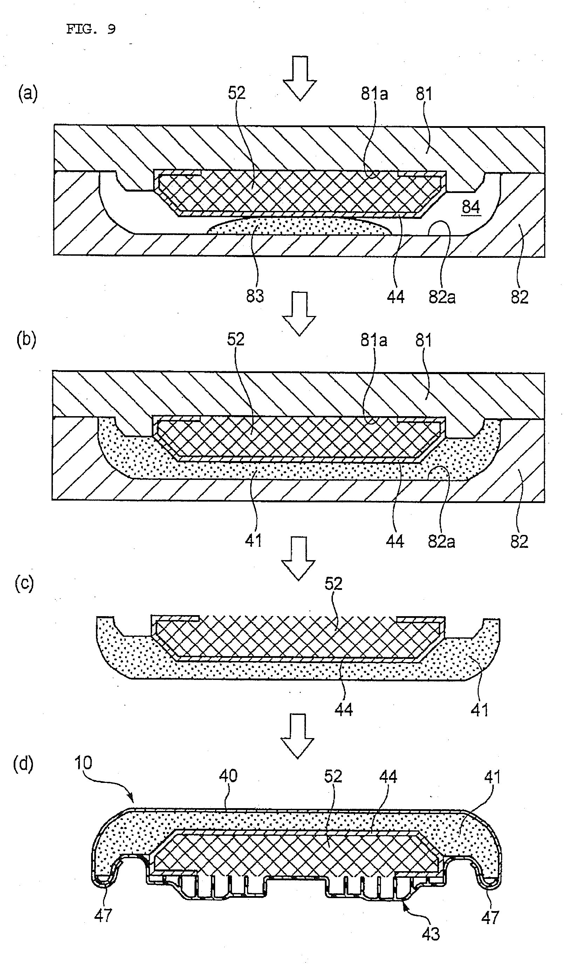

A method for making the vehicular seat or the watercraft seat according to an embodiment of the present invention will be described below with reference to Figs. 8 and 9. In the descriptions that follow, the vehicular seat 10 according to the second embodiment of the present invention will be used as an example.

The method for making the vehicular seat 10 includes the steps of: forming the second cushion member 52 of the thermoplastic elastomer of a net-like structure by cutting (see Fig. 8(a)); affixing the covering sheet 44 generally to the second cushion member 52 excluding part of the lower surface of the second cushion member 52 (see Fig. 8(b)); setting the second cushion member 52, to which the covering sheet 44 is affixed, into a recessed portion 81a formed in a lower surface of an upper mold (a first mold) 81 (see Fig. 8(c)); loading a urethane material 83 into a recessed portion 82b formed in an upper surface of a lower mold (a second mold) 82 (see Fig. 8(d)); closing the upper mold 81 and the lower mold 82 (see Fig. 9(a)); foaming the urethane material 83 in a cavity 84 formed between the upper mold 81 and the lower mold 82 and integrally forming the first cushion member 41 on the surface of the covering sheet 44 affixed to the second cushion member 52 (see Fig. 9(b)); removing an integrated assembly of the first cushion member 41, the second cushion member 52, and the covering sheet 44 from the upper mold 81 and the lower mold 82 (see Fig. 9(c)); and mounting the bottom plate 43 on a lower surface of the integrated assembly of the first cushion member 41, the second cushion member 52, and the covering sheet 44, covering the surface of the first cushion member 41 with the seat skin 40, and mounting the seat skin 40 on the seat skin mounting portion 47 of the bottom plate 43 (see Fig. 9(d)). The vehicular seat 71 and the watercraft seat 72 are made by the same making processes.

As described above, the method for making the vehicular seat 10 according to the embodiment of the present invention includes the steps of: forming the second cushion member 52; affixing the covering sheet 44 generally to the second cushion member 52 excluding part thereof; setting the second cushion member 52, to which the covering sheet 44 is affixed, onto the upper mold 81; loading the urethane material 83 into the lower mold; closing the upper mold 81 and the lower mold 82; foaming the urethane material 83 and integrally forming the first cushion member 41 on the surface of the covering sheet 44 affixed to the second cushion member 52; removing the integrated assembly of the first cushion member 41, the second cushion member 52, and the covering sheet 44 from the upper mold 81 and the lower mold 82; and mounting the bottom plate 43 on the lower surface of the integrated assembly of the first cushion member 41, the second cushion member 52, and the covering sheet 44, covering the surface of the first cushion member 41 with the seat skin 40, and mounting the seat skin 40 on the bottom plate 43. The vehicular seat 10 having the first and second cushion members 41, 52 integrated together can be easily obtained by foaming the urethane material 83.

Although the foregoing describes the exemplary preferred embodiments, various changes in form and detail may be made therein without departing from the scope of the invention as defined in the appended claims.

For example, the vehicular seat according to the embodiments of the present invention is suited to those of motorcycles and saddle riding type vehicles and of automobiles and of saddle riding type watercrafts. These are not the only possible applications and the present invention may be applied to seats in industrial vehicles, trains, aircraft, and other various types of vehicles.

The present invention is directed to provide a vehicular seat and a method for making the vehicular seat that can achieve a favorable riding comfort, reduce the number of work processes involved, and reduce a manufacturing cost even by foaming a first cushion member of urethane on a second cushion member of a thermoplastic elastomer to make an integrated assembly of the first cushion member of urethane and the second cushion member.

## Claims

1. A vehicular seat (10; 71; 72) comprising:
a first cushion member (41) formed of urethane, the first cushion member (41) being covered with a seat skin (40);
a second cushion member (42; 52; 62) formed of a thermoplastic elastomer, the second cushion member (42; 52; 62) being disposed between the first cushion member (41) and a bottom plate (43); and
a covering sheet (44) disposed between the first cushion member (41) and the second cushion member (42; 52; 62),
**characterized in that**
the second cushion member (42; 52; 62) has a net-like structure,
the bottom plate (43) has a plurality of ribs (49) disposed on an upper surface thereof, the ribs (49) extending toward a lower surface of the second cushion member (42; 52; 62) to support the lower surface of the second cushion member (42; 52; 62), and
the covering sheet (44) covers the entire second cushion member (42; 52; 62) except for a part of the lower surface thereof adjacent the bottom plate (43) such that air inside the second cushion member (42) can be aspirated via the ribs (49) on the side of the bottom plate (43).

2. A method for making a vehicular seat (10; 71; 72) according to claim 1, the method comprising the steps of:
forming the second cushion member (42; 52; 62) having a net-like structure;
affixing the covering sheet (44) generally to the second cushion member (42; 52; 62) excluding part thereof;
setting the second cushion member (42; 52; 62), to which the covering sheet (44) is affixed, into a first mold (81);
loading a urethane material (83) into a second mold (82);
closing the first mold (81) and the second mold (82);
foaming the urethane material (83) to thereby integrally form the first cushion member (41) on a surface of the covering sheet (44) affixed to the second cushion member (42; 52; 62);
removing an integrated assembly of the first cushion member (41), the second cushion member (42; 52; 62), and the covering sheet (44) from the first mold (81) and the second mold (82); and
mounting the bottom plate (43) on a lower surface of the integrated assembly of the first cushion member (41), the second cushion member (42; 52; 62), and the covering sheet (44), covering a surface of the first cushion member (41) with the seat skin (40), and mounting the seat skin (40) on the bottom plate (43).

## Patentansprüche

1. Fahrzeugsitz (10; 71; 72), umfassend:
ein erstes Polsterelement (41), welches aus Urethan gebildet ist, wobei das erste Polsterelement (41) mit einem Sitzbezug (40) bedeckt ist;
ein zweites Polsterelement (42; 52; 62), welches aus einem thermoplastischen Elastomer gebildet ist, wobei das zweite Polsterelement (42; 52; 62) zwischen dem ersten Polsterelement (41) und einer Bodenplatte (43) angeordnet ist; und
eine Deckschicht (44), welche zwischen dem ersten Polsterelement (41) und dem zweiten Polsterelement (42; 52; 62) angeordnet ist,
**dadurch gekennzeichnet, dass**
das zweite Polsterelement (42; 52; 62) eine netzartige Struktur aufweist,
die Bodenplatte (43) eine Mehrzahl von Rippen (49) aufweist, welche an einer oberen Fläche davon angeordnet sind, wobei sich die Rippen (49) in Richtung einer unteren Fläche des zweiten Polsterelements (42; 52; 62) erstrecken, um die untere Fläche des zweiten Polsterelements (42; 52; 62) zu stützen, und
die Deckschicht (44) das gesamte zweite Polsterelement (42; 52; 62) bedeckt, mit Ausnahme eines Teils der unteren Fläche davon, welcher der Bodenplatte (43) benachbart ist, so dass Luft innerhalb des zweiten Polsterelements (42) über die Rippen (49) an der Seite der Bodenplatte (43) angesaugt werden kann.

2. Verfahren zur Herstellung eines Fahrzeugsitzes (10; 71; 72) nach Anspruch 1, wobei das Verfahren die folgenden Schritte umfasst:
Bilden des zweiten Polsterelements (42; 52; 62), welches die netzartige Struktur aufweist;
Befestigen der Deckschicht (44) im Wesentlichen an dem zweiten Polsterelement (42; 52; 62) mit Ausnahme eines Teils davon;
Setzen des zweiten Polsterelements (42; 52; 62), an welchem die Deckschicht (44) befestigt ist, in eine erste Form (81);
Laden eines Urethan-Materials (83) in eine zweite Form (82);
Schließen der ersten Form (81) und der zweiten Form (82);
Schäumen des Urethan-Materials (83), um dadurch das erste Polsterelement (41) integral an einer Fläche der Deckschicht (44) zu bilden, welche an dem zweiten Polsterelement (42; 52; 62) befestigt ist;
Entfernen einer integrierten Baugruppe des ersten Polsterelements (41), des zweiten Polsterelements (42; 52; 62) und der Deckschicht (44) aus der ersten Form (81) und der zweiten Form (82), und
Montieren der Bodenplatte (43) an einer unteren Fläche der integrierten Baugruppe des ersten Polsterelements (41), des zweiten Polsterelements (42; 52; 62) und der Deckschicht (44), Bedecken einer Fläche des ersten Polsterelements (41) mit dem Sitzbezug (40) und Montieren des Sitzbezugs (40) an der Bodenplatte (43).

## Revendications

1. Siège de véhicule (10 ; 71 ; 72) comprenant :
un premier élément de coussin (41) formé à partir d'uréthane, le premier élément de coussin (41) étant recouvert avec un revêtement de siège (40) ;
un second élément de coussin (42 ; 52 ; 62) formé avec un élastomère thermoplastique, le second élément de coussin (42 ; 52 ; 62) étant disposé entre le premier élément de coussin (41) et une plaque inférieure (43) ; et
une feuille de recouvrement (44) disposée entre le premier élément de coussin (41) et le second élément de coussin (42 ; 52 ; 62),
**caractérisé en ce que** :
le second élément de coussin (42 ; 52 ; 62) a une structure en forme de filet,
la plaque inférieure (43) a une pluralité de nervures (49) disposées sur sa surface supérieure, les nervures (49) s'étendant vers une surface inférieure du second élément de coussin (42 ; 52 ; 62) pour supporter la surface inférieure du second élément de coussin (42 ; 52 ; 62), et
la feuille de recouvrement (44) recouvre tout le second élément de coussin (42 ; 52 ; 62) excepté pour une partie de sa surface inférieure adjacente à la plaque inférieure (43) de sorte que l'air à l'intérieur du second élément de coussin (42) peut être aspiré via les nervures (49) sur le côté de la plaque inférieure (43) .

2. Procédé pour fabriquer un siège de véhicule (10 ; 71 ; 72) selon la revendication 1, le procédé comprenant les étapes suivantes :
former le second élément de coussin (42 ; 52 ; 62) ayant une structure en forme de filet ;
fixer la feuille de recouvrement (44) généralement sur le second élément de coussin (42 ; 52 ; 62) excluant une partie de ce dernier ;
installer le second élément de coussin (42 ; 52 ; 62) auquel la feuille de recouvrement (44) est fixée, dans un premier moule (81) ;
charger un matériau d'uréthane (83) dans un second moule (82) ;
fermer le premier moule (81) et le second moule (82) ;
faire mousser le matériau d'uréthane (83) pour former ainsi, de manière solidaire, le premier élément de coussin (41) sur une surface de la feuille de recouvrement (44) fixée sur le second élément de coussin (42 ; 52 ; 62) ;
retirer un ensemble intégré composé du premier élément de coussin (41), du second élément de coussin (42 ; 52 ; 62) et de la feuille de recouvrement (44) du premier moule (81) et du second moule (82) ; et
monter la plaque inférieure (43) sur une surface inférieure de l'ensemble intégré composé du premier élément de coussin (41), du second élément de coussin (42 ; 52 ; 62) et de la feuille de recouvrement (44), recouvrir une surface du premier élément de coussin (41) avec le revêtement de siège (40) et monter le revêtement de siège (40) sur la plaque inférieure (43).
